# EUROPEAN PATENT APPLICATION

(11) **EP 4 624 286 A1**
(43) Date of publication of application: **01.10.2025**
(21) Application number: 25152593.7
(22) Date of filing: 17.01.2025
(51) Int. Cl.: B60T 7/08, B60T 7/10, B60T 8/40, B60T 11/16, B60T 11/224, B60T 11/236, B60T 11/24

(54) **NESTED BRAKE UPPER PUMP WITH A DYNAMIC AND STATIC DUAL-CORE STRUCTURE**

(30) Priority: 26.03.2024 CN 202410347986; 31.03.2024 CN 202410380920
(71) Applicant: Ningbo Lewis Sports Goods Co., Ltd., Cixi, Zhejiang 315301 (CN)
(72) Inventor: CHEN, Yonggang, Cixi, 315301 (CN); CHEN, Ziyu, Cixi, 315301 (CN); QI, Jiechong, Cixi, 315301 (CN)
(74) Representative: Metida

(57) **Abstract**

Provided herein is a nested brake upper pump with a dynamic and static dual-core structure including a brake pump body (1) provided with an oil chamber; a piston push rod assembly (2); a brake handle (3). The piston push rod assembly (2) includes: a fixed piston cylinder sleeve (21) having a cylinder sleeve through hole and forming a large diameter section (11a) and a small diameter section (11b) in the oil chamber; a moving piston push rod movably arranged in the oil chamber. The moving piston push rod includes an oil pushing section and a transmission section at least partially penetrated in the cylinder sleeve through hole; a large diameter piston oil seal located in the large diameter section; a small diameter piston oil seal (23) located in the small diameter section (11b); a fixed sealing ring sleeved on the outer wall of the fixed piston cylinder sleeve (21).

## Description

### TECHNICAL FIELD

The disclosure relates to the technical field of hydraulic brake products, in particular to a nested brake upper pump with a dynamic and static double-core structure.

### BACKGROUND ART

The principle of high-performance brakes is: in order to obtain greater braking force, the size of the brake lower pump needs to be enlarged, which has formed the common four-piston calipers, six-piston calipers, eight-piston calipers, etc. on the market. Often, the more pistons there are, the larger the matching brake pads are, the more brake boost oil is required, and the better braking effect is finally achieved. Based on the needs of the brake lower pump, the brake upper pump needs to have a larger unit stroke oil push volume, that is, the size of the piston chamber and the piston push rod (piston seal) in the brake upper pump needs to be enlarged. However, the larger the piston seal, the greater the friction resistance formed between it and the inner wall. In order to enable the piston push rod (piston seal) to automatically reset after use, a piston spring with greater elasticity is required (for example, the wire diameter of the spring is increased), which will cause new defects, that is, the user needs to overcome the elasticity of the piston spring when squeezing the handle to boost. A larger piston spring will result in greater boost, hard feel, and poor user experience.

In summary, in the existing brake upper pumps on the market, the multiple piston oil seals or sealing rings on the piston push rod have the same or almost the same size. The brake upper pumps of the prior art have structural and functional defects, such as: 1. With the development of products, the demand for brake braking force increases, that is, the size of the brake lower pump piston cavity needs to be enlarged, so that the piston push rod in the brake upper pump needs to produce a larger amount of oil push per unit moving distance to obtain a better braking effect. However, it will also cause the size of the piston oil seal to increase (especially the piston oil seal at the rear end), which will cause more obvious resistance when pushing forward, showing a wall-hitting feel; 2. When the brake handle is used, the piston push rod is constantly moving back and forth, and the piston oil seal is constantly scraped against the inner wall of the piston cavity (especially the piston oil seal at the rear end), and the direction of the force of the piston push rod is inclined and asymmetric, so after long-term use, the parts will be deformed and worn, and then there will be problems of sealing failure and oil leakage; 3. When the inner wall of the piston cavity is scratched, if maintenance is required, the entire brake pump body needs to be replaced, which is extremely costly. 4. When the rear piston rod is against the front piston rod, a good seal cannot be achieved, that is, the brake oil will still partially enter the oil guide chamber through the oil overflow hole; 5 The sealing rings/piston oil seals on the rear piston rod and the front piston rod are constantly scraped against the inner wall of the pressure cylinder during the forward and backward movement, causing the inner wall to be more easily damaged and leaking; 6 At the beginning of the design, the ideal motion trajectory of the front piston rod and the rear piston rod was preset, but the rear piston rod and the front piston rod are both active, and the elastic force of the spring between the two will fatigue with use, and there are many uncertainties, which makes the front piston rod and the rear piston rod lack a stable or fixed fulcrum when moving, resulting in a significant deviation between the actual motion trajectory and the ideal motion trajectory, which in turn causes the brake feel to be soft and hard, and the brake oil push volume to be large and small, resulting in poor braking effect.

### SUMMARY

In order to overcome the above-mentioned deficiencies in the prior art , the present disclosure provides a nested brake upper pump with a dynamic and static dual-core structure. Through the dynamic and static dual-core structure, the size of the rear end oil plug and oil seal is reduced, the braking feel is optimized, the chance of component wear is reduced, and the use requirements of a larger boost amount are met.

The present disclosure to solve the technical problem is: a nested brake upper pump with a dynamic and static dual-core structure, comprising: a brake pump body, wherein a piston cavity is provided inside the pump body, and the piston cavity is filled with brake oil; a movable piston push rod assembly, which is installed in the piston chamber; a brake handle is in rotational cooperation with the brake pump body through the pivot mechanism, and the brake handle is in abutment with the moving piston push rod assembly through the rotation and push mechanism to form a transmission cooperation; an oil pipe assembly, which is connected to the brake cylinder body and communicates with the piston chamber.

The movable piston push rod assembly comprises: a fixed piston cylinder sleeve, which is fixedly installed in the piston cavity, the fixed piston cylinder sleeve has a driving hole, and the fixed piston cylinder sleeve forms a large diameter section and a small diameter section in the piston cavity; a movable piston push rod assembly is movably arranged in the piston cavity; the movable piston push rod assembly comprises a front oil pushing piston and a rear transmission piston, and the rear transmission piston is at least partially penetrated in the driving hole; a piston oil seal is sleeved on the outer wall of the front oil-pushing piston, and the piston oil seal is located in the large-diameter section, and the brake oil pushing chamber is formed between the piston oil seal and the front end of the piston chamber; a first sealing ring is arranged between the inner wall of the driving hole and the outer wall of the rear transmission piston, and the first sealing ring is located in the small diameter section, and the radial dimension of the first sealing ring is smaller than the radial dimension of the piston oil seal; the second sealing ring is sleeved on the outer wall of the fixed piston cylinder sleeve, and the second sealing ring abuts against the inner wall of the piston chamber to form a sealing fit.

A further setting of the above implementation scheme is that, in the initial position state, the distance between the first sealing ring and the front end surface of the small-diameter section is L2, the maximum boost stroke of the dynamic piston push rod assembly is L1, and L2>L1.

A further setting of the above embodiment is that the inner diameter of the large-diameter section is D1, the inner diameter of the small-diameter section is D2, and D1>D2.

Some preferred configurations of the above embodiments are as follows: an outer wall of the fixed piston cylinder sleeve forms a limiting fit with an inner wall of the piston chamber through a second step structure.

Some preferred configurations of the above embodiments further include a piston spring, which is located in the piston cavity, and the piston spring abuts between the moving piston push rod assembly and the inner wall of the piston cavity.

A further preferred embodiment of the present disclosure is that the brake pump body is further provided with an oil storage chamber, and the oil storage chamber is connected with the piston chamber through an oil replenishing hole.

A through driving hole is provided in the fixed piston cylinder sleeve, and a first oil hole is provided on the side wall of the fixed piston cylinder sleeve.

The rear transmission piston and the front oil pushing piston are formed separately, and the rear transmission piston is movably arranged in the driving hole. The rear transmission piston abuts against the brake handle through the rotating and pushing mechanism to form a transmission match.

The piston spring includes a front piston spring and a rear piston spring, the front oil-pushing piston is located in front of the rear transmission piston, a rear piston spring is arranged between the front oil-pushing piston and the rear transmission piston, a front piston spring is arranged between the front oil-pushing piston and the front end of the piston cavity, and a brake oil pushing cavity is formed between the front oil-pushing piston and the piston cavity; an oil passage cavity is provided in the front oil-pushing piston, and a second oil hole is provided on the side wall of the front oil-pushing piston.

The front oil pushing piston is provided with a support part, and the support part can abut against the fixed piston cylinder sleeve to form a limit fit for the front oil pushing piston when the front oil pushing piston retreats; when the rear transmission piston retreats, the rear transmission piston can abut against the transfer mechanism to form a limit fit.

When the movable piston push rod assembly is acted upon by the brake handle, the movable piston push rod assembly has at least an initial position, an idle stroke critical position and a brake oil ejection position relative to the piston chamber.

When the brake handle is not pressed, the movable piston push rod assembly is in the initial position; when the rear transmission piston and the front oil pushing piston are against each other, the movable piston push rod assembly is in the idle stroke critical position; when the rear transmission piston and the front oil pushing piston move forward together, the movable piston push rod assembly is in the brake oil pushing position.

The rear transmission piston has at least an initial pre-pressure stroke state and a rear pressure-building stroke state relative to the front oil-pushing piston.

When the movable piston push rod assembly moves from the initial position to the idle stroke critical position, the rear transmission piston is in the initial pre-pressure stroke state; when the movable piston push rod assembly moves from the idle stroke critical position to the brake oil pushing position, the rear transmission piston is in the rear pressure building stroke state.

When the rear transmission piston is in the initial pre-compression stroke state, the positions of the rear transmission piston and the first oil hole and the second oil hole are staggered, so that the oil storage chamber is connected with the brake oil pushing chamber through the oil replenishing hole, the first oil hole, the driving hole, the second oil hole, the oil passage chamber and the brake oil pushing chamber in sequence.

When the rear transmission piston is in the rear pressure building stroke state, the rear transmission piston is closed between the first oil hole and the second oil hole, so that the oil storage chamber is disconnected from the brake oil pushing chamber.

The compression force of the rear piston spring is smaller than the compression force of the front piston spring.

The above preferred embodiment is further configured as follows: the thrust force exerted by the brake handle on the moving piston push rod assembly through the push-turn mechanism is F1, the interaction force between the rear piston spring and the rear transmission piston is F2, the interaction force between the front piston spring and the front oil push piston is F3, the friction force between the first sealing ring and the inner wall of the fixed piston cylinder sleeve is F4, and the friction force between the piston oil seal and the inner wall of the piston cavity is F5.

When the brake handle is squeezed and the rear transmission piston is in the initial pre-compression stroke state, the rear transmission piston moves independently relative to the front oil push piston, satisfying F1 >F2+F4, and F3=F2, F5=0.

When the brake handle is squeezed and the rear transmission piston is in the rear pressure-building stroke state, the rear transmission piston and the front oil-pushing piston move together, satisfying F1>F2+F3+F4+F5.

When the brake handle is released to reset and the moving piston push rod assembly is between the brake oil push position and the empty stroke critical position, the rear transmission piston and the front oil push piston move together, satisfying F2+F3 >F4+F5, F1=0.

When the brake handle is released to reset and the moving piston push rod assembly is between the empty stroke critical position and the initial position, the rear transmission piston moves independently relative to the front oil push piston, satisfying F2>F4, and F3=F5==F1=0.

A further setting of the above preferred embodiment is that the inner diameter of the piston cavity is larger than the inner diameter of the fixed piston cylinder sleeve, and the radial dimension of the piston oil seal is larger than the radial dimension of the first sealing ring.

A third sealing ring is disposed at the rear end of the support portion, and the rear transmission piston can abut against the third sealing ring to form a sealing fit.

The specific setting of the present disclosure is that the said transfer and pushing mechanism comprises a transfer and pushing shaft and an assisting rod.

The booster rod comprises a ball head section and a transfer section, the transfer section is in transmission connection with the brake handle via a transfer shaft, and the ball head section extends into the drive hole and forms a transmission fit with the moving piston push rod assembly.

A further setting of the above preferred technical solution is that the end of the driving hole has a shrinkage hole section, and the radial dimension of the ball head section is larger than the radial dimension of the shrinkage hole section, so that the ball head section forms a limited anti-dropping fit with the shrinkage hole section through the first step structure.

The radial dimension of the transition section is smaller than the radial dimension of the shrinkage hole section, so that the transition section can pass through the shrinkage hole section.

An adjusting mandrel is movably provided in the transfer section, the front end of the adjusting mandrel is connected to the ball head section, and the rear end of the adjusting mandrel is the adjusting end.

The ball head section can be moved forward or backward by operating the adjusting end, so that the ball head section drives the rear section transmission piston to move, so as to change the initial position of the moving piston push rod assembly.

When the moving piston push rod assembly is in the initial position, the rear end of the rear-stage transmission piston and the end of the driving hole form an inactive chamber.

Furthermore, a positioning hole is provided on the brake pump body, a fastener is passed through the positioning hole, and the fastener can abut against the fixed piston cylinder sleeve, so that the fixed piston cylinder sleeve and the brake pump body are tightly abutted against each other.

The installation direction of the fastener and the installation direction of the fixed piston cylinder sleeve are arranged perpendicular to each other.

A further setting of the above preferred embodiment is that a first accommodating groove is provided on the front end of the rear transmission piston, and an insertion section is formed on the rear end of the front oil pushing piston, and the insertion section extends into the first accommodating groove.

The inserting section is provided with a second accommodating groove, the second oil hole is provided on the side wall of the second accommodating groove, and the second oil hole is connected with the oil passage cavity through the second accommodating groove.;

The rear piston spring is arranged in the second accommodating groove, and the rear piston spring abuts between the rear end of the first accommodating groove and the front end of the second accommodating groove.

A preferred configuration of the present disclosure is that the fixed piston cylinder sleeve is made of a high-hardness wear-resistant material.

The beneficial effects of the present disclosure are:
1. The combination of the piston oil seal and the first sealing ring can obtain a larger oil push volume per unit moving distance of the moving piston push rod assembly through the piston oil seal , thereby obtaining a better braking effect; through the first sealing ring, the friction assistance is reduced, so that a piston spring with smaller elastic force (for example, the wire diameter of the spring is reduced) can be used, which has a lighter and better boosting feel and eliminates the feeling of hitting the wall.

Second, due to the setting of the fixed piston cylinder sleeve, the first sealing ring does not directly contact the inner wall of the piston cavity, so during use, the first sealing ring will not scratch the inner wall of the piston cavity. Even if wear and leakage problems occur after long-term use, only the fixed piston cylinder sleeve needs to be maintained or replaced separately, and there is no need to replace the entire brake pump body, which greatly reduces maintenance costs.

3. Since the fixed piston cylinder sleeve is an independent structural component relative to the brake pump body and its production and molding are also independent, the fixed piston cylinder sleeve is preferably made of high-hardness and wear-resistant material to increase the service life of the fixed piston cylinder sleeve.

Fourth, by setting the fixed piston cylinder sleeve, the size of the first sealing ring can be made smaller, so that the sealing area is also smaller, the friction resistance is reduced, and the risk of oil leakage is greatly reduced.

5. A three-stage piston structure is adopted to form a new oil circuit (oil replenishing hole, first oil hole, driving hole, second oil hole, oil passage chamber) between the oil storage chamber and the piston chamber (brake oil pushing chamber), realizing the basic function of the brake pump; and, with the help of the setting of the fixed piston cylinder sleeve (which is a fixed structural component), during the use of the brake, a stable hard limit is provided for the maximum retreat position of the front oil pushing piston, eliminating the influence between the springs and ensuring that a distance can be generated between the rear transmission piston and the front oil pushing piston during resetting to reopen the oil circuit and make the operation more reliable.

6. Only one oil filling hole is retained between the pressure cylinder and the oil storage cylinder, which reduces the chance of friction damage between components while retaining the braking function.

7. When resetting, the front oil-pushing piston first contacts the fixed piston cylinder sleeve and stops moving under the action of the front piston spring, and then the rear transmission piston continues to move backward under the action of the rear piston spring until it moves to the initial position. Therefore, when the rear transmission piston moves backward relative to the front oil-pushing piston alone, the piston oil seal on the front oil-pushing piston no longer moves, and only the first sealing ring on the rear transmission piston rubs against the inner wall of the fixed piston cylinder sleeve. Compared with traditional products, the contact area and friction resistance between the components are greatly reduced, making the movement of the moving piston push rod assembly smoother. In addition, the user's finger pressure will be significantly reduced when pushing forward (especially when the rear transmission piston is in the initial pre-pressure stroke state), reducing finger fatigue.

### BRIEF DESCRIPTION OF THE DRAWINGS

FIG. 1 is a schematic structural diagram of the present disclosure.
FIG.2 is an exploded view of the present disclosure.
FIG.3 is a cross-sectional view of the present disclosure (when the moving piston push rod assembly is in the initial position).
FIG.4 is an enlarged schematic diagram of part A in FIG. 3.
FIG.5 is a cross-sectional view of the present disclosure (when the moving piston push rod assembly is in the maximum push-out position).
FIG.6 is an enlarged schematic diagram of portion B in FIG. 4.
FIG.7 is a schematic diagram of the disassembly and assembly of the fastener.
FIG.8 is a schematic diagram of the structural disassembly and assembly for replacing the fixed piston cylinder sleeve.
FIG.9 is a schematic diagram of the assembly of the moving piston push rod assembly and the brake handle.
FIG.10 is a schematic diagram of the separation of the non-full-size fixed piston cylinder sleeve and the movable piston push rod assembly in the fifth embodiment.
FIG.11 is a schematic diagram of the separation of the full-size fixed piston cylinder sleeve and the movable piston push rod assembly in the fifth embodiment.
FIG.12 is a cross-sectional view of a full-size fixed piston cylinder sleeve used in Embodiment 5.
FIG.13 is a cross-sectional view and a partially enlarged view of the rear transmission piston in the second embodiment when it is in the initial pre-compression stroke state.
FIG.14 is a cross-sectional view and a partially enlarged view of the rear-stage transmission piston in the second embodiment switching from the initial pre-pressure stroke state to the rear-stage pressure-building stroke state.
FIG.15 is a cross-sectional view and a partially enlarged view of the rear-stage transmission piston in the second embodiment when it is in the rear-stage pressure-building stroke state.
FIG. 16 is an exploded view of a local structure in the second embodiment.
FIG.17 is a schematic diagram of the partial structure of the rear transmission piston in the second embodiment when it is in the initial pre-compression stroke state.
FIG. IS is a schematic diagram of the partial structure of the rear transmission piston in the second embodiment when it is in the rear pressure building stroke state.
FIG.19 is an exploded view of the moving piston push rod assembly in the second embodiment.
FIG.20 is a relationship diagram between the position state and the displacement (front oil push piston and rear piston push rod) during forward push in Example 2.
FIG. 21 is a diagram showing the relationship between the position state and the friction resistance during resetting in the second embodiment.
FIGS.22A-22B are schematic diagrams showing the comparison before and after the initial position adjustment in the fifth embodiment.
FIGS. 23A-23B is a schematic diagram comparing two installation methods of the first sealing ring.

In the figures: 1 represents brake pump body; 11 represents piston chamber; 11a represents large diameter section; 11b represents small diameter section; 111 represents oil storage chamber; 1121 represents brake oil push chamber; 12 represents positioning hole; 13 represents oil filling hole; 2 represents moving piston push rod assembly; 2a represents initial position; 2b represents empty stroke critical position; 2c represents brake oil push position; 2ab represents initial pre-pressure stroke state; 2bc represents rear pressure building stroke state; 21 represents fixed piston cylinder sleeve ; 211 represents driving hole; 2111 represents shrinkage section; 2112 represents sealing hole; 212 represents first oil hole; 221 represents front oil push piston; 2211 represents oil through chamber; 222 represents rear transmission piston; 2221 represents first accommodating groove; 223 represents support part; 234 represents insertion section; 2341 represents second accommodating groove; 225 represents second oil hole; 23 represents Piston oil seal; 24 represents first sealing ring; 25 represents second sealing ring; 26 represents third sealing ring; 3 represents brake handle; 4 represents Pivoting mechanism; 5 represents turning mechanism; 51 represents Turning shaft; 52 represents boosting rod; 521 represents ball head section; 522 represents adapter section; 5221 represents thread; 53 represents adjusting spindle; 531 represents adjusting end; 54 represents inactive chamber; 6 represents oil pipe assembly; 7 represents front piston spring; 71 represents rear piston spring; 8 represents First step structure; 9 represents second step structure; 10 represents fastener.

### DETAILED DESCRIPTION

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments of the present disclosure, all other embodiments obtained by ordinary technicians in this field without creative work are within the scope of protection of the present disclosure.

### Embodiment 1

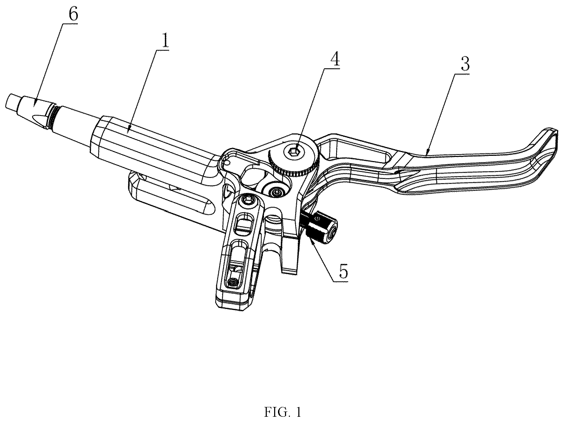

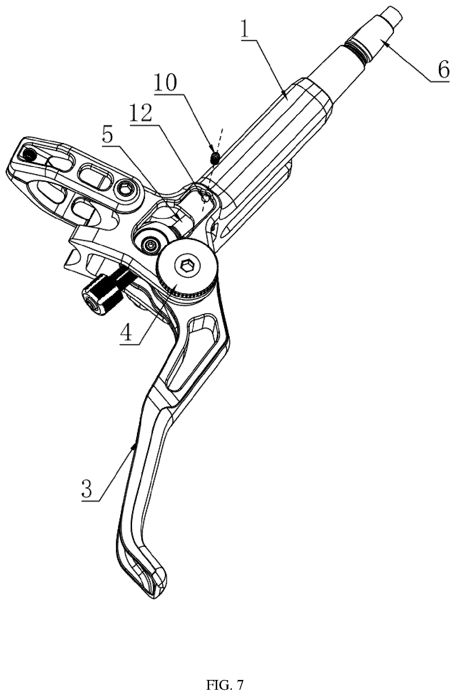

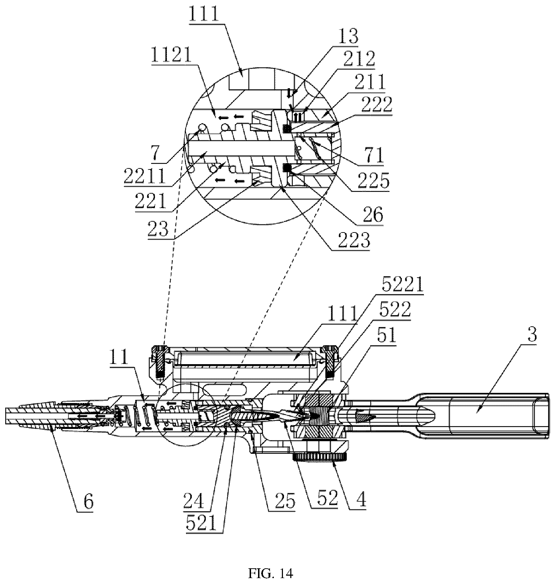

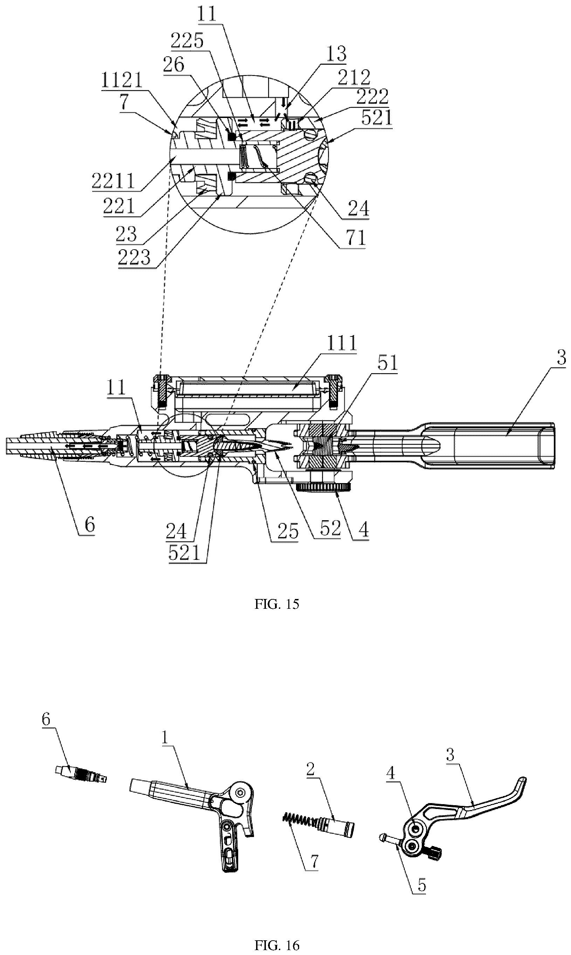

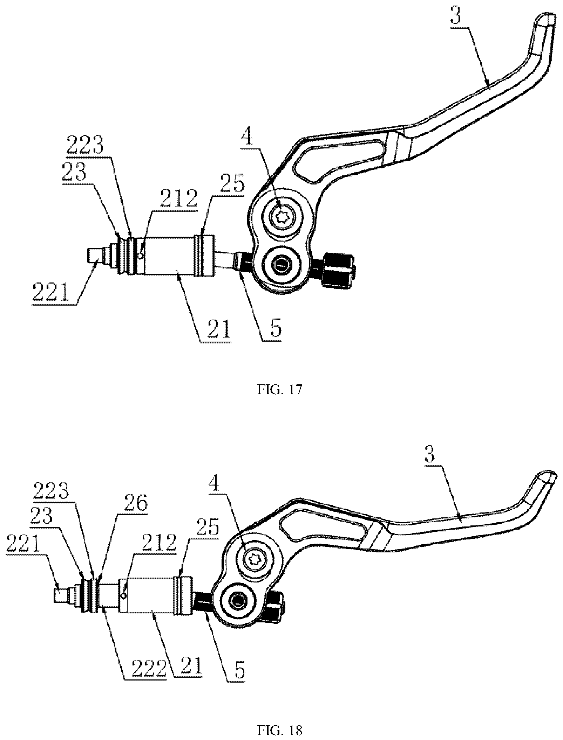

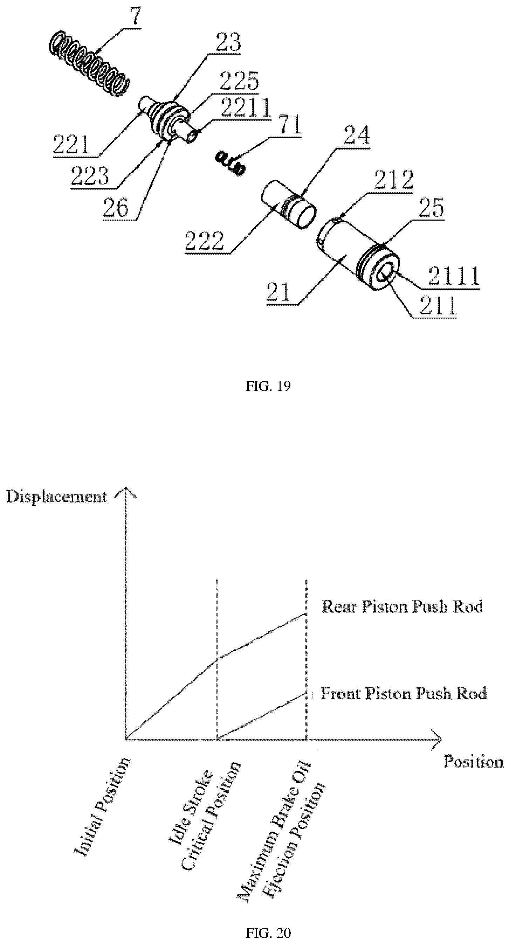

Referring to Figures 1 to 23, a nested brake upper pump with a dynamic and static dual-core structure includes: a brake pump body 1, which has a piston chamber 11 inside, and the piston chamber 11 is filled with brake oil; a dynamic piston push rod assembly 2, which is installed in the piston chamber 11; a brake handle 3, which forms a rotational fit with the brake pump body 1 through a pivot mechanism 4, and the brake handle 3 is abutted against the dynamic piston push rod assembly 2 through a rotating push mechanism 5 to form a transmission fit; an oil pipe assembly 6, which is connected to the brake pump body 1 and is in communication with the piston chamber 11.

The feature different from the prior art is that the movable piston push rod assembly 2 has a dynamic and static dual core structure, specifically including:
A fixed piston cylinder sleeve 21 (serving as a stationary core) is fixedly installed in the piston chamber 11. The fixed piston cylinder sleeve 21 has a driving hole 211, and the fixed piston cylinder sleeve 21 forms a large diameter section 11a and a small diameter section 11b in the piston chamber 11;

The movable piston push rod assembly 2 (as a movable core) is movably arranged in the piston cavity 11; the movable piston push rod assembly 2 includes a front oil pushing piston 221 and a rear transmission piston 222, and the rear transmission piston 222 is at least partially penetrated in the driving hole 211;

Based on the characteristics of the above-mentioned dynamic and static dual-core structure (i.e., the fixed piston cylinder sleeve 21 and the dynamic piston push rod assembly 2), the present disclosure also has the following three sealing structures, specifically:
The piston oil seal 23 is mainly used for building pressure and pushing oil. It is sleeved on the outer wall of the front oil pushing piston 221, and the piston oil seal 23 is located in the large diameter section 11a; preferably, the front oil pushing piston 221 of the moving piston push rod assembly 2 has a support portion 223, which plays a role in supporting the piston oil seal 23, and the radial dimension of the support portion 223 is greater than the radial dimension of the rear transmission piston 222;

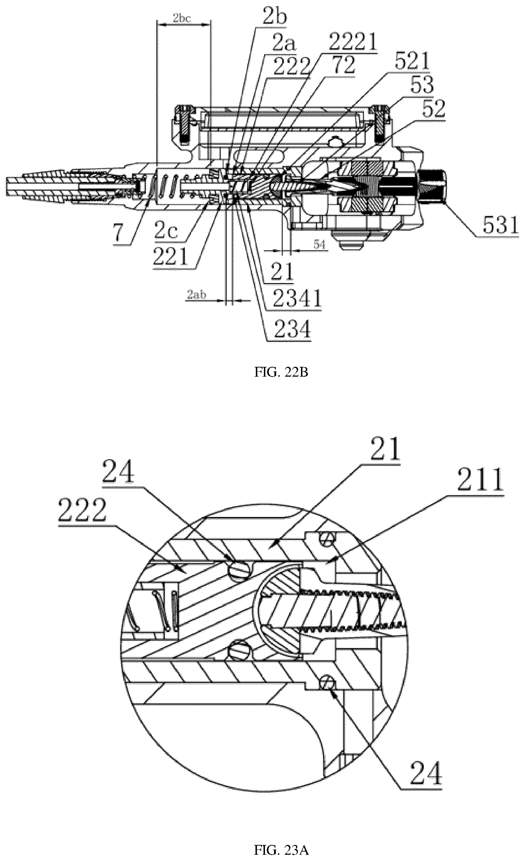

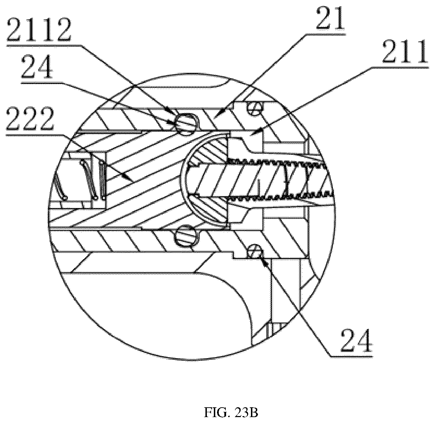

The first sealing ring 24 is mainly used for sealing the rear end of the moving piston push rod assembly 2. It is arranged between the inner wall of the driving hole 211 and the outer wall of the rear transmission piston 222, and the first sealing ring 24 is located in the small diameter section 11b. Due to the existence of the fixed piston cylinder sleeve 21, the radial dimension of the first sealing ring 24 is smaller than the radial dimension of the piston oil seal 23. It should be pointed out that, referring to FIGS. 23A-23B, the first sealing ring 24 can be directly sleeved on the outer wall of the rear transmission piston 222, and move with the rear transmission piston 222, and contact and seal with the inner wall of the driving hole 211 during the movement; or, the inner wall of the driving hole 211 has a sealing hole 2112, and the first sealing ring 24 is embedded in the sealing hole 2112, so that the rear transmission piston 222 remains stationary during the movement, and the rear transmission piston 222 always abuts against the first sealing ring 24 to form a seal.

The second sealing ring 25 is mainly used for sealing the rear end of the fixed piston cylinder sleeve 21 and is sleeved on the outer wall of the fixed piston cylinder sleeve 21 . The second sealing ring 25 abuts against the inner wall of the piston chamber 11 to form a sealing fit.

When the user squeezes the brake handle 3, the movable piston push rod assembly 2 moves forward in the piston chamber 11, and the piston oil seal 23 and the first sealing ring 24 on the movable piston push rod assembly 2 move forward synchronously, pushing the brake oil in the piston chamber 11 into the oil pipe assembly 6. During this process, the fixed piston cylinder sleeve 21 and the second sealing ring 25 remain stationary to ensure the sealing performance and prevent the brake oil in the piston chamber 11 from leaking.

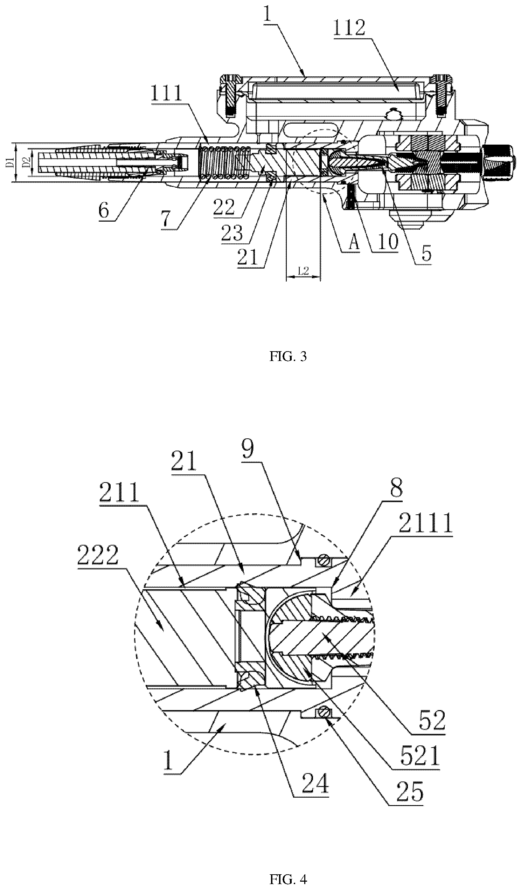

Since the first sealing ring 24 needs to play a sealing role, an interference fit is formed between the first sealing ring 24 and the driving hole 211. Once the first sealing ring 24 is separated from the driving hole 211, it will be difficult for the first sealing ring 24 to return to the driving hole 211 in a suitable shape; or, when the first sealing ring 24 is reset, it will be subjected to a strong extrusion force, which is easy to be separated from the correct position, deformed and damaged. Therefore, in order to solve this defect, in the specific setting of the present disclosure, referring to Figures 3 to 6, in the initial position 2a state, the distance between the first sealing ring 24 and the front end surface of the small diameter section 11b is L2, and the maximum boost stroke of the moving piston push rod assembly 2 is L1, L2>L1. Therefore, during the movement of the moving piston push rod assembly 2, the first sealing ring 24 can be always in the driving hole 211 of the fixed piston cylinder sleeve 21, ensuring that the first sealing ring 24 is in a stable working state.

3 to 6 , in a preferred configuration of the present disclosure, the inner diameter of the large diameter section 11a is D1, and the inner diameter of the small diameter section 11b is D2, where D1>D2, thereby achieving a diameter reduction function, thereby making the first sealing ring 24 smaller in radial dimension than the piston oil seal 23 while ensuring their respective basic functions.

In summary, it can be concluded without a doubt that when the radial dimension of the piston chamber 11 increases, the thickness of the fixed piston cylinder sleeve 21 is increased, that is, the radial dimension of the driving hole 211 can be reduced, thereby achieving the purpose of reducing the radial dimension of the first sealing ring 24. Furthermore, a larger amount of oil is pushed under a unit moving distance of the piston push rod, and a better braking effect is achieved. With the help of the first sealing ring 24, a lighter and better boosting feel is achieved, and the feeling of hitting the wall is eliminated.

On the other hand, due to the arrangement of the fixed piston cylinder sleeve 21, the first sealing ring 24 does not directly contact the piston chamber 11, so during use, the first sealing ring 24 will not scratch the inner wall of the piston chamber 11. Even if wear and leakage problems occur after long-term use, only the fixed piston cylinder sleeve 21 needs to be maintained or replaced separately, and there is no need to replace the entire brake pump body 1, which greatly reduces maintenance costs.

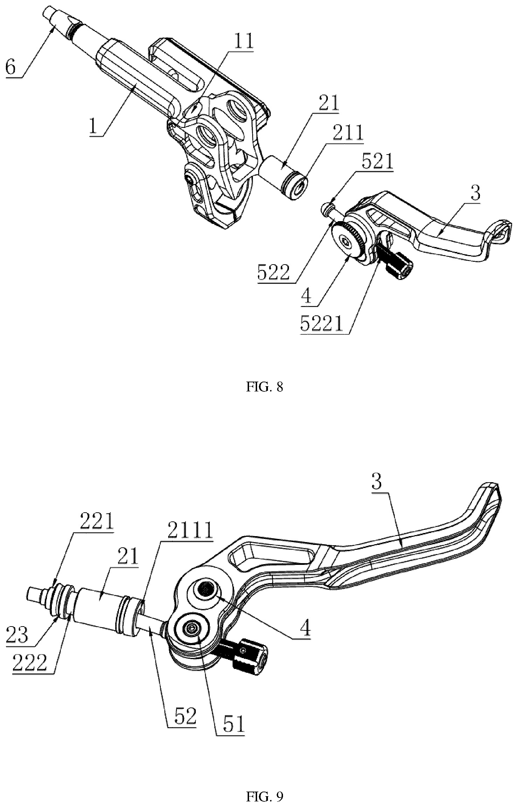

Further, referring to Figures 8 to 10, since the fixed piston cylinder sleeve 21 is an independent structural component relative to the brake pump body 1 and its production and molding are also independent, the fixed piston cylinder sleeve 21 is preferably made of high hardness and wear-resistant material to improve the service life of the fixed piston cylinder sleeve 21.

The present disclosure further includes a piston spring, which is located in the piston cavity 11, and the piston spring abuts between the movable piston push rod assembly 2 and the inner wall of the piston cavity 11. Under the action of the piston spring, the movable piston push rod assembly 2 always has a movement tendency to reset backwards.

In the present disclosure, the fixed piston cylinder sleeve 21 is located at any one or more of the front end, middle part and rear end of the piston cavity 11 without any special limitation.

In the present disclosure, the specific shapes of the piston oil seal 23, the first sealing ring 24 and the second sealing ring 25 are not particularly limited.

4, the mounting structure of the fixed piston cylinder sleeve 21 is preferably configured as follows:
1. The outer wall of the fixed piston cylinder sleeve 21 forms a limiting fit with the inner wall of the piston chamber 11 through the second step structure 9 to prevent the fixed piston cylinder sleeve 21 from moving forward.

Second, the brake pump body 1 is provided with a positioning hole 12, and a fastener 10 is passed through the positioning hole 12, and the fastener 10 can abut against the fixed piston cylinder sleeve 21, so that the fixed piston cylinder sleeve 21 and the brake pump body 1 are pressed against each other. Preferably, the installation direction of the fastener 10 and the installation direction of the fixed piston cylinder sleeve 21 are perpendicular to each other.

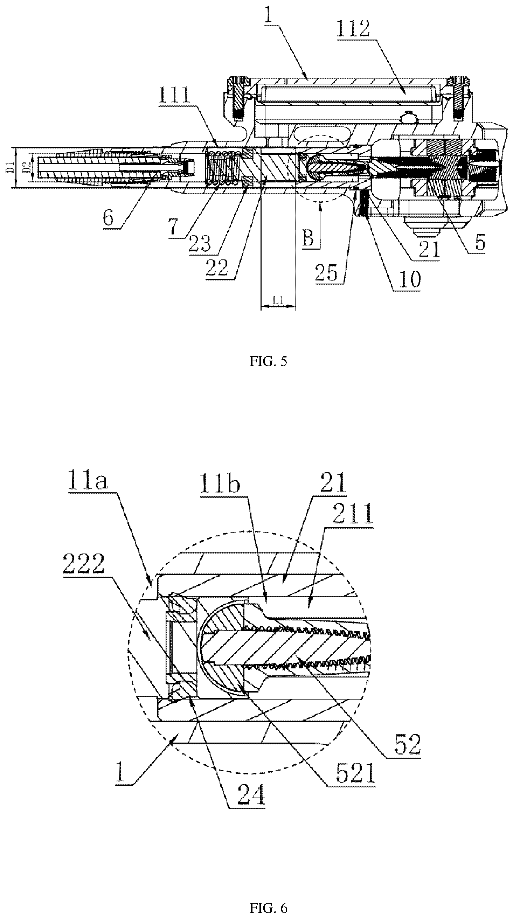

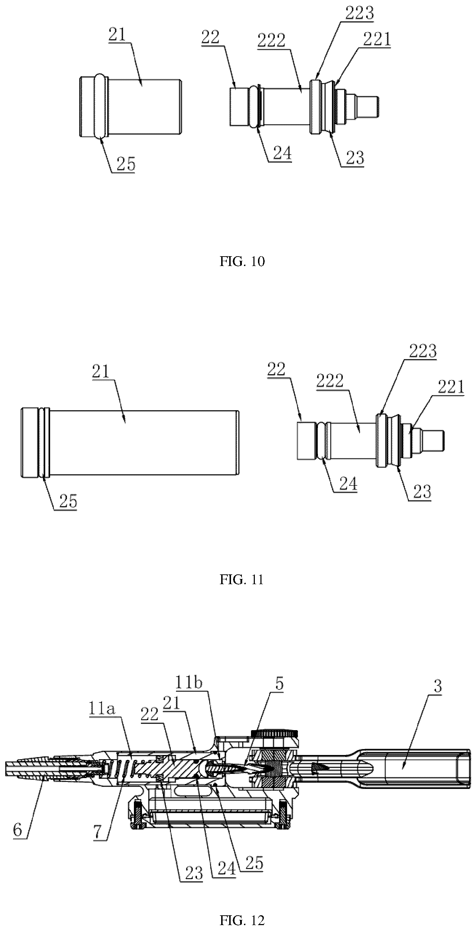

In the present disclosure, the fixed piston cylinder sleeve 21 can be full-size or non-full-size. Referring to Figures 11 and 12, in the case of full-size, the length of the fixed piston cylinder sleeve 21 is consistent or almost consistent with the length of the piston chamber 11, and the large-diameter section 11a and the small-diameter section 11b are formed by processing the drive hole 211 in the fixed piston cylinder sleeve 21. Referring to Figures 6 and 10, in the case of non-full-size, the length of the fixed piston cylinder sleeve 21 is significantly smaller than the length of the piston chamber 11, and the small-diameter section 11b is formed where the fixed piston cylinder sleeve 21 is located, and the large-diameter section 11a is formed in other areas of the piston chamber 11.

### Embodiment 2

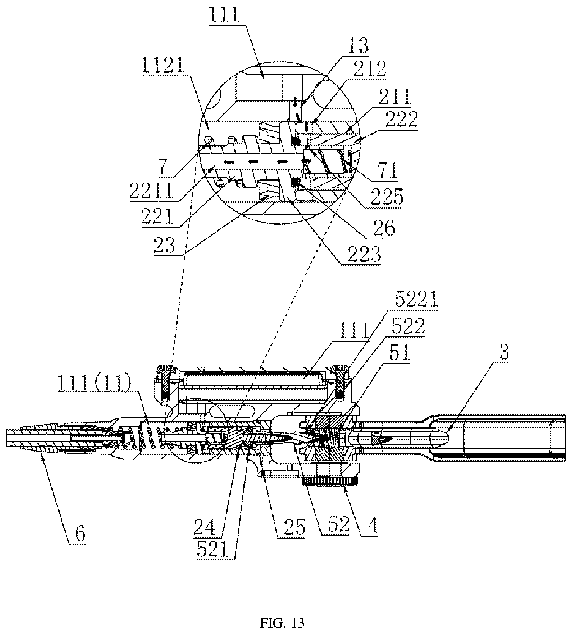

Based on the structure of the first embodiment, the present embodiment further defines the structure of the moving piston push rod assembly 2 to optimize the oil circuit structure, increase the function of the brake pump, and improve the user experience. Referring to FIGS. 13 to 21 , the specific scheme is as follows:
The brake pump body 1 is also provided with an oil storage chamber 111, and the oil storage chamber 111 is connected with the piston chamber 11 through the oil replenishing hole 13;
A through driving hole 211 is provided in the fixed piston cylinder sleeve 21, and a first oil hole 212 is provided on the side wall of the fixed piston cylinder sleeve 21 ;
The rear transmission piston 222 and the front oil pushing piston 221 are formed separately, and the rear transmission piston 222 is movably arranged in the driving hole 211. The rear transmission piston 222 abuts against the brake handle 3 through the transfer mechanism 5 to form a transmission match;
The piston spring includes a front piston spring 7 and a rear piston spring 71. The front oil-pushing piston 221 is located in front of the rear transmission piston 222. The rear piston spring 71 is provided between the front oil-pushing piston 221 and the rear transmission piston 222. The front piston spring 7 is provided between the front oil-pushing piston 221 and the front end of the piston cavity 11, and a brake oil pushing cavity 1121 is formed between the front oil-pushing piston 221 and the piston cavity 11; an oil passage cavity 2211 is provided in the front oil-pushing piston 221, and a second oil hole 225 is provided on the side wall of the front oil-pushing piston 221;
The front oil pushing piston 221 has a support portion 223, and the support portion 223 can abut against the fixed piston cylinder sleeve 21 to form a limit fit for the front oil pushing piston 221 when the front oil pushing piston 221 retreats; when the rear transmission piston 222 retreats, the rear transmission piston 222 can abut against the transfer mechanism 5 to form a limit fit;
When the movable piston push rod assembly 2 is acted upon by the brake handle 3, the movable piston push rod assembly 2 has at least an initial position 2a, an empty stroke critical position 2b and a brake oil ejection position 2c relative to the piston chamber 11;
When the brake handle 3 is not pressed, the movable piston push rod assembly 2 is in the initial position 2a; when the rear transmission piston 222 and the front oil pushing piston 221 are against each other, the movable piston push rod assembly 2 is in the idle stroke critical position 2b; when the rear transmission piston 222 and the front oil pushing piston 221 move forward together, the movable piston push rod assembly 2 is in the brake oil pushing position 2c;
The rear transmission piston 222 has at least an initial pre-pressure stroke state 2ab and a rear pressure-building stroke state 2bc relative to the front oil-pushing piston 221;
When the movable piston push rod assembly 2 moves from the initial position 2a to the idle stroke critical position 2b, the rear transmission piston 222 is in the initial pre-pressure stroke state 2ab; when the movable piston push rod assembly 2 moves from the idle stroke critical position 2b to the brake oil pushing position 2c, the rear transmission piston 222 is in the rear pressure building stroke state 2bc;
When the rear transmission piston 222 is in the initial pre-compression stroke state 2ab, the rear transmission piston 222 is staggered from the first oil hole 212 and the second oil hole 225, so that the oil storage chamber 111 is connected to the brake oil pushing chamber 1121 through the oil replenishing hole 13, the first oil hole 212, the driving hole 211, the second oil hole 225, the oil passage chamber 2211 in sequence;
When the rear transmission piston 222 is in the rear pressure building stroke state 2bc, the rear transmission piston 222 is closed between the first oil hole 212 and the second oil hole 225 so that the oil storage chamber 111 is disconnected from the brake oil pushing chamber 1121 .

In order to meet the working conditions of the aforementioned front-end oil pushing piston 221 and the rear-end transmission piston 222 , it is preferred that the compression force of the rear piston spring 71 is smaller than the compression force of the front piston spring 7 .

The above content is the basic structural scheme of the present disclosure. Among them, the initial pre-stress stroke state 2ab is understood as the initial stage when the user squeezes the brake handle 3. At this time, the brake handle 3 pushes the rear transmission piston 222 through the push mechanism 5, so the rear transmission piston 222 moves forward (the distance with the front oil push piston 221 is reduced) and squeezes the rear piston spring 71, and it is preferably set that the compression elastic force of the front piston spring 7 is greater than the compression elastic force of the rear piston spring 71, so the front oil push piston 221 remains stationary (or the displacement of the front oil push piston 221 is less than the rear transmission piston 222, so that the rear transmission piston 222 is close to the front oil push piston 221). In addition, at this time, the entire oil circuit (mainly referring to the oil circuit between the oil storage chamber 111 and the brake oil push chamber 1121) is unobstructed, and correspondingly, squeezing the brake handle 3 at this time is relatively easy, corresponding to the idle stroke action section in the early stage of braking, that is, the braking effect is not actually effective in this process.

The rear section pressure building stroke state 2bc is understood as the brake handle 3 continues to push the rear section transmission piston 222 through the transfer mechanism 5. At this time, the rear section transmission piston 222 moves forward and abuts against the front section oil pushing piston 221 to form a transmission match (or the rear section transmission piston 222 interacts with the front section oil pushing piston 221 through the third sealing ring 26). When the brake handle 3 is continued to be squeezed, the end piston push rod will drive the front piston push rod to move forward together and squeeze the front piston spring 7. At this time, the rear section transmission piston 222 is closed between the first oil hole 212 and the second oil hole 225, so that the oil storage chamber 111 is disconnected from the brake oil pushing chamber 1121, so that the brake oil pushing chamber 1121 forms a relatively sealed space. Correspondingly, the brake handle 3 is squeezed more heavily at this time, which corresponds to the actual braking action section, that is, the brake is actually effective in this process.

In this embodiment, the description of each sealing element is as follows:
1. A piston oil seal 23 is provided at the front end of the support portion 223, and the brake oil pushing chamber 1121 is formed between the piston oil seal 23 and the front end of the piston chamber 11; the piston oil seal 23 is used to build pressure so that the brake oil in the piston chamber 11 is pushed into the oil pipe assembly 6 when the front oil pushing piston 221 moves forward (and finally flows along the oil pipe assembly 6 toward the brake pump to achieve the braking function).

Second, a first sealing ring 24 is sleeved on the outer wall of the rear transmission piston 222, and the first sealing ring 24 abuts against the inner wall of the piston cylinder sleeve and forms a sealing fit. The inner diameter of the piston cavity 11 is larger than the inner diameter of the piston cylinder sleeve, and the radial dimension of the piston oil seal 23 is larger than the radial dimension of the first sealing ring 24. The first sealing ring 24 is provided to, firstly, play a sealing role to prevent the brake oil from leaking backward from the gap between the rear piston push rod and the piston cylinder sleeve; secondly, with the presence of the piston cylinder sleeve, the size of the first sealing ring 24 can be reduced, and the friction assistance can be reduced, so that a piston spring with smaller elastic force (for example, the wire diameter of the spring is reduced) can be used, which has a lighter and better boosting feel and eliminates the feeling of hitting the wall.

3. A second sealing ring 25 is sleeved on the outer wall of the piston cylinder sleeve, and the second sealing ring 25 abuts against the inner wall of the piston chamber 11 to form a sealing fit. The second sealing ring 25 plays a sealing role to prevent the brake oil from leaking backward from the gap between the outer wall of the piston cylinder sleeve and the inner wall of the piston chamber 11.

Fourth, the rear end of the support part 223 is provided with a third sealing ring 26, and the rear transmission piston 222 can abut against the third sealing ring 26 and form a sealing fit. The third sealing ring 26 is provided to, firstly, play a sealing role, that is, when the rear transmission piston 222 is in the rear pressure building stroke state 2bc, it can play a better oil circuit disconnection and sealing effect; secondly, the third sealing ring 26 is located between the front oil pushing piston 221 and the rear transmission piston 222, which can prevent the rear transmission piston 222 from having direct hard contact with the front oil pushing piston 221, and play a role of isolation, buffering and protection.

### Embodiment 3

Based on the second embodiment, this embodiment analyzes the stresses at various stages during the use of the brake pump, specifically:
The thrust F1 exerted on the piston push rod assembly by the brake handle 3 through the push-turn mechanism 5 is forward, and the thrust F1 disappears when the brake handle 3 is released; the interaction force between the rear piston spring 71 and the rear piston push rod is F2, and the force F2 is forward when the brake handle 3 is squeezed, and the force F2 is backward when the brake handle 3 is released; the interaction force between the front piston spring 7 and the front section oil push piston 221 is F3, and the force F3 is forward when the brake handle 3 is squeezed, and the force F3 is backward when the brake handle 3 is released; the friction force between the first sealing ring 24 and the inner wall of the piston cylinder sleeve is F4, and the friction force F4 is backward when the brake handle 3 is squeezed, and the friction force F4 is forward when the brake handle 3 is released; the friction force between the piston oil seal 23 and the inner wall of the piston cavity 11 is F5, and the friction force F5 is backward when the brake handle 3 is squeezed, and the friction force F5 is forward when the brake handle 3 is released;
the brake handle 3 is pressed and the rear transmission piston 222 is in the initial pre-compression stroke state 2ab , the rear transmission piston 222 moves independently relative to the front oil pushing piston 221, satisfying F1>F2+F4, and F3=F2, F5=0. At this time, the piston oil seal 23 and the front oil pushing piston 221 are stationary, and the first sealing ring 24 moves forward together with the rear transmission piston 222;
When the brake handle 3 is pressed and the rear transmission piston 222 is in the rear pressure building stroke state 2bc, the rear transmission piston 222 and the front oil pushing piston 221 move together, satisfying F1> F2+F3+F4+F5. At this time, the piston oil seal 23, the front oil pushing piston 221, the first sealing ring 24 and the rear transmission piston 222 move forward together;
When the brake handle 3 is released and reset and the piston push rod assembly is between the brake oil push position 2c and the idle stroke critical position 2b, the rear transmission piston 222 and the front oil push piston 221 move together, satisfying F2+F3>F4+F5, F1=0. At this time, the piston oil seal 23, the front oil push piston 221, the first sealing ring 24 and the rear transmission piston 222 move backward together;
When the brake handle 3 is released and reset and the piston push rod assembly is between the idle stroke critical position 2b and the initial position 2a, the rear transmission piston 222 moves independently relative to the front oil pushing piston 221, satisfying F2>F4, and F3=F5==F1=0. At this time, the piston oil seal 23 and the front oil pushing piston 221 are stationary, and the first sealing ring 24 moves backward together with the rear transmission piston 222.

In summary, when the brake handle 3 is squeezed and the rear transmission piston 222 is in the initial pre-compression stroke state 2ab, and the brake handle 3 is released to reset and the piston push rod assembly is between the empty stroke critical position 2b and the initial position 2a, the piston oil seal 23 on the front oil push piston 221 no longer moves, and only the first sealing ring 24 on the rear piston push rod rubs against the inner wall of the piston cylinder sleeve. Compared with traditional products, the contact area and friction resistance between components are greatly reduced, making the movement of the piston push rod assembly smoother. In addition, the user's finger pressure will be significantly reduced when pushing forward (especially when the rear transmission piston 222 is in the initial pre-compression stroke state 2ab), reducing finger fatigue.

### Embodiment 4

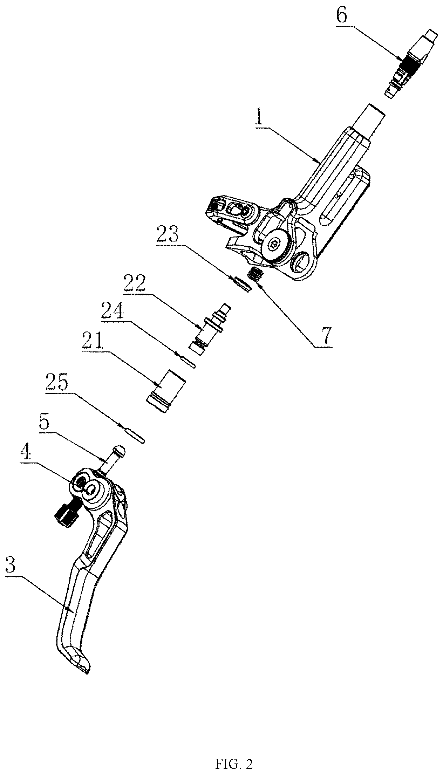

Based on the structural scheme of the first embodiment, this embodiment provides a preferred composition scheme for the forwarding mechanism 5, referring to FIGS. 2 to 9 , specifically:
The said transfer and pushing mechanism 5 comprises a transfer and pushing shaft 51 and an auxiliary push rod 52;
The booster rod 52 includes a ball head section 521 and a transition section 522. The transition section 522 forms a transmission connection with the brake handle 3 through the transfer shaft 51. Preferably, a thread 5221 is provided on the transition section 522, so that the transition section 522 is connected to the transfer shaft 51 through the thread 5221 connection method; in addition, the ball head section 521 extends into the drive hole 211 and forms a transmission fit with the dynamic piston push rod assembly 2.
Furthermore, the end of the driving hole 211 has a shrinkage section 2111, and the radial dimension of the ball head section 521 is larger than the radial dimension of the shrinkage section 2111, so that the ball head section 521 forms a limited anti-dropping fit with the shrinkage section 2111 through the first step structure 8;
On the other hand, the radial dimension of the transition section 522 is smaller than the radial dimension of the shrinkage section 2111, so that the transition section 522 can pass through the shrinkage section 2111. Therefore, during installation, an inverted installation method is adopted, after the transition section 522 passes through the shrinkage section 2111, the fixed piston cylinder sleeve 21 and the booster rod 52 are connected together by the limit formed by the first step structure 8, and then the two are installed as a whole into the piston chamber 11 of the brake cylinder body 1.
A further preferred structure is that a positioning hole 12 is provided on the brake pump body 1, and a fastener 10 is passed through the positioning hole 12, and the fastener 10 can abut against the fixed piston cylinder sleeve 21, so that the fixed piston cylinder sleeve 21 and the brake pump body 1 are pressed against each other. Preferably, the installation direction of the fastener 10 and the installation direction of the fixed piston cylinder sleeve 21 are perpendicular to each other.

### Embodiment 5

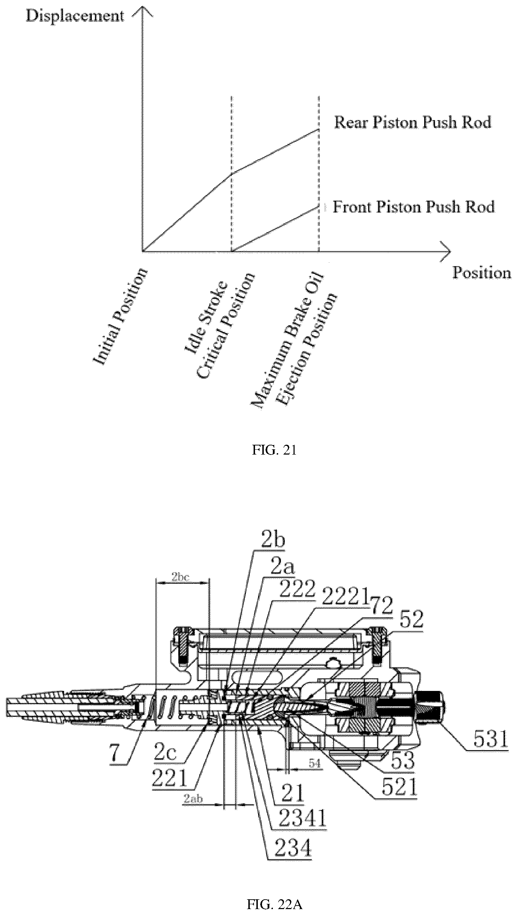

The scheme of this embodiment is established on the basis of the structure of the fourth embodiment, specifically: with reference to Figure 22, an adjusting spindle 53 is movably inserted into the transition section 522, the front end of the adjusting spindle 53 is connected to the ball head section 521, and the rear end of the adjusting spindle 53 is the adjusting end 531; the ball head section 521 can be moved forward or backward by operating the adjusting end 531, so that the ball head section 521 drives the rear piston push rod to move, so as to change the initial position 2a of the piston push rod assembly; when the piston push rod assembly is in the initial position 2a, the rear end of the rear piston push rod and the end of the driving hole 211 form an inactive cavity 54.

The change of the initial position 2a can, firstly, realize personalized settings to meet the operating requirements of different users for the brake handle 3; secondly, it can adjust the spacing size of the inactive cavity 54, that is, adjust the spacing size between the initial position 2a and the empty stroke critical position 2b to meet the usage requirements of different users for the empty stroke.

### Embodiment 6

In the present disclosure, referring to FIGS. 22A-22B , a first receiving groove 2221 is provided on the front end of the rear piston push rod, and an insertion section 234 is formed at the rear end of the front oil pushing piston 221, and the insertion section 234 extends into the first receiving groove 2221;
The inserting section 234 is provided with a second receiving groove 2341 , the second oil hole 225 is provided on the side wall of the second receiving groove 2341 , and the second oil hole 225 is connected with the oil passage cavity 2211 through the second receiving groove 2341 ;
The rear piston spring 71 is disposed in the second receiving groove 2341, and the rear piston spring 71 abuts between the rear end of the first receiving groove 2221 and the front end of the second receiving groove 2341. The cooperation between the insertion section 234 and the second receiving groove 2341 can make the relative motion relationship between the front section oil pushing piston 221 and the rear piston push rod more stable and reliable.
By providing the first accommodating groove 2221 and the second accommodating groove 2341, a good limiting effect can be exerted on the rear piston spring 71 , thereby preventing it from being separated from its normal position during the extension and retraction process.

The above is only a preferred embodiment of the present disclosure and does not limit the present disclosure in any way. Any simple modification, change and equivalent structural change made to the above embodiment according to the technical essence of the disclosure still falls within the protection scope of the technical solution of the present disclosure.

## Claims

1. A nested brake upper pump with a dynamic and static dual-core structure, comprising:
a brake pump body (1), wherein a piston cavity (11) is provided inside the pump body (1), and the piston cavity (11) is filled with brake oil;
a movable piston push rod assembly (2), which is installed in the piston chamber (11);
a brake handle (3), which is in rotational cooperation with the brake pump body (1) through the pivot mechanism (4), and the brake handle (3) is in abutment with the moving piston push rod assembly (2) through the rotation and push mechanism to form a transmission cooperation;
an oil pipe assembly (6), which is connected to the brake cylinder body (1) and communicates with the piston chamber (11);
it is **characterized in that** the movable piston push rod assembly (2) comprises:
a fixed piston cylinder sleeve (21), which is fixedly installed in the piston cavity (11), the fixed piston cylinder sleeve (21) has a driving hole (211), and the fixed piston cylinder sleeve (21) forms a large diameter section (11a) and a small diameter section (11b) in the piston cavity (11);
a movable piston push rod assembly (2), which is movably arranged in the piston cavity (11); the movable piston push rod assembly (2) comprises a front oil pushing piston (221) and a rear transmission piston (222), and the rear transmission piston (222) is at least partially penetrated in the driving hole (211);
a piston oil seal (23), which is sleeved on the outer wall of the front oil-pushing piston (221), and the piston oil seal (23) is located in the large-diameter section (11a), and the brake oil pushing chamber (1121) is formed between the piston oil seal (23) and the front end of the piston chamber (11);
a first sealing ring (24), which is arranged between the inner wall of the driving hole (211) and the outer wall of the rear transmission piston (222), and the first sealing ring (24) is located in the small diameter section (11a), and the radial dimension of the first sealing ring (24) is smaller than the radial dimension of the piston oil seal (23);
a second sealing ring (25), which is sleeved on the outer wall of the fixed piston cylinder sleeve (21), and the second sealing ring (25) abuts against the inner wall of the piston chamber (11) to form a sealing fit.

2. The nested brake upper pump with a dynamic and static dual-core structure according to claim 1 is **characterized in that**: in the initial position (2a) state, the distance between the first sealing ring (24) and the front end surface of the small-diameter section (11b) is L2, and the maximum boost stroke of the dynamic piston push rod assembly (2) is L1, L2>L1.

3. The nested brake upper pump with a dynamic and static dual-core structure according to claim 1 is **characterized in that** the inner diameter of the large-diameter section (11a) is D1, the inner diameter of the small-diameter section (11b) is D2, and D1>D2.

4. The nested brake upper pump with a dynamic and static dual-core structure according to claim 1 is **characterized in that** the outer wall of the fixed piston cylinder sleeve (21) forms a limiting fit with the inner wall of the piston cavity (11) through a second step structure (9).

5. The nested brake upper pump with a dynamic and static dual-core structure according to claim 1 is **characterized in that** it also includes a piston spring, which is located in the piston cavity (11), and the piston spring abuts between the dynamic piston push rod assembly (2) and the inner wall of the piston cavity (11).

6. The nested brake upper pump with a dynamic and static dual-core structure according to claim 5, **characterized in that**: an oil storage chamber (111) is also provided in the brake pump body (1), and the oil storage chamber (111) is connected with the piston chamber (11) through an oil replenishing hole (13);
a through driving hole (211) is provided in the fixed piston cylinder sleeve (21), and a first oil hole (212) is provided on the side wall of the fixed piston cylinder sleeve (21);
the rear transmission piston (222) and the front oil pushing piston (221) are formed separately, and the rear transmission piston (222) is movably arranged in the driving hole (211); the rear transmission piston (222) abuts against the brake handle (3) through the rotating and pushing mechanism to form a transmission match;
the piston spring includes a front piston spring (7) and a rear piston spring (71), the front oil-pushing piston (221) is located in front of the rear transmission piston (222), a rear piston spring (71) is arranged between the front oil-pushing piston (221) and the rear transmission piston (222), a front piston spring (7) is arranged between the front oil-pushing piston (221) and the front end of the piston cavity (11), and a brake oil pushing cavity (1121) is formed between the front oil-pushing piston (221) and the piston cavity (11); an oil passage cavity (2211) is provided in the front oil-pushing piston (221), and a second oil hole (225) is provided on the side wall of the front oil-pushing piston (221);
the front oil pushing piston (221) is provided with a support part (223), and the support part (223) can abut against the fixed piston cylinder sleeve (21) to form a limit fit for the front oil pushing piston (221) when the front oil pushing piston (221) retreats; when the rear transmission piston (222) retreats, the rear transmission piston (222) can abut against the transfer mechanism (5) to form a limit fit;
when the movable piston push rod assembly (2) is acted upon by the brake handle (3), the movable piston push rod assembly (2) has at least an initial position (2a), an idle stroke critical position (2b) and a brake oil ejection position (2c) relative to the piston chamber (11);
is not pressed, the movable piston push rod assembly (2) is in the initial position (2a); when the rear transmission piston (222) and the front oil pushing piston (221) are against each other, the movable piston push rod assembly (2) is in the idle stroke critical position (2b); when the rear transmission piston (222) and the front oil pushing piston (221) move forward together, the movable piston push rod assembly (2) is in the brake oil pushing position (2c);
the rear transmission piston (222) has at least an initial pre-pressure stroke state (2ab) and a rear pressure-building stroke state (2bc) relative to the front oil-pushing piston (221);
when the movable piston push rod assembly (2) moves from the initial position (2a) to the idle stroke critical position (2b), the rear transmission piston (222) is in the initial pre-pressure stroke state (2ab); when the movable piston push rod assembly (2) moves from the idle stroke critical position (2b) to the brake oil pushing position (2c), the rear transmission piston (222) is in the rear pressure building stroke state (2bc);
when the rear transmission piston (222) is in the initial pre-compression stroke state (2ab), the positions of the rear transmission piston (222) and the first oil hole (212) and the second oil hole (225) are staggered, so that the oil storage chamber (111) is connected with the brake oil pushing chamber through the oil replenishing hole (13), the first oil hole (212), the driving hole (211), the second oil hole (225), the oil passage chamber (2211) and the brake oil pushing chamber (1121) in sequence;
when the rear transmission piston (222) is in the rear pressure building stroke state (2bc), the rear transmission piston (222) is closed between the first oil hole (212) and the second oil hole (225), so that the oil storage chamber (111) is disconnected from the brake oil pushing chamber (1121).

7. The nested brake upper pump with a dynamic and static dual-core structure according to claim 6 is **characterized in that** the compression force of the rear piston spring (71) is smaller than the compression force of the front piston spring (7).

8. The nested brake upper pump with a dynamic and static dual-core structure according to claim 6 is **characterized in that**: the thrust of the brake handle (3) acting on the dynamic piston push rod assembly (2) through the push -turn mechanism is F1, the interaction force between the rear piston spring (71) and the rear transmission piston (222) is F2, the interaction force between the front piston spring (7) and the front oil-pushing piston (221) is F3, the friction force between the first sealing ring (24)and the inner wall of the fixed piston cylinder sleeve (21) is F4, and the friction force between the piston oil seal (23) and the inner wall of the piston cavity (11) is F5;
the brake handle (3) is squeezed and the rear transmission piston (222) is in the initial pre-compression stroke state (2ab), the rear transmission piston (222) moves independently relative to the front oil push piston (221), satisfying F1 > F2+F 4, and F3=F2, F5=0;
the brake handle (3) is squeezed and the rear transmission piston (222) is in the rear pressure-building stroke state (2bc), the rear transmission piston (222) and the front oil-pushing piston (221) move together, satisfying F1>F2+F3+F4+F5;
when the brake handle (3) is released to reset and the moving piston push rod assembly (2) is between the brake oil push position (2c) and the empty stroke critical position (2b), the rear transmission piston (222) and the front oil push piston (221) move together, satisfying F2+F3 >F4+F5, F1=0;
when the brake handle (3) is released to reset and the moving piston push rod assembly (2) is between the empty stroke critical position (2b) and the initial position (2a), the rear transmission piston (222) moves independently relative to the front oil push piston (221), satisfying F2>F4, and F3=F5==F1=0.

9. The nested brake upper pump with a dynamic and static dual-core structure according to claim 6, **characterized in that**: the inner diameter of the piston cavity (11) is larger than the inner diameter of the fixed piston cylinder sleeve (21), and the radial dimension of the piston oil seal (23) is larger than the radial dimension of the first sealing ring (24);
at the rear end of the support portion (223), and the rear transmission piston (222) can abut against the third sealing ring (26) to form a sealing fit.

10. The nested brake upper pump with a dynamic and static dual-core structure according to claim 1, **characterized in that**: the said transfer mechanism (5) comprises a transfer shaft (51) and an auxiliary thrust rod;
the booster rod (52) comprises a ball head section (521) and a transfer section, the transfer section is in transmission connection with the brake handle (3) via a transfer shaft (51), and the ball head section (521) extends into the drive hole (211) and forms a transmission fit with the moving piston push rod assembly (2).

11. The nested brake upper pump with a dynamic and static dual-core structure according to claim 10, **characterized in that**: the end of the driving hole (211) has a shrinkage section (2111), and the radial dimension of the ball head section (521) is larger than the radial dimension of the shrinkage section (2111), so that the ball head section (521) forms a limited anti-dropping fit with the shrinkage section (2111) through the first step structure (8);
the radial dimension of the transition section (522) is smaller than the radial dimension of the shrinkage hole section, so that the transition section (522) can pass through the shrinkage hole section.

12. The nested brake upper pump with a dynamic and static dual-core structure according to claim 10, **characterized in that**: an adjustment mandrel is movably inserted into the transfer section, the front end of the adjustment mandrel is connected to the ball head section (521), and the rear end of the adjustment mandrel is the adjustment end;
the ball head section (521) can be moved forward or backward by operating the adjusting end, so that the ball head section (521) drives the rear section transmission piston (222) to move, so as to change the initial position (2a) of the moving piston push rod assembly (2);
when the moving piston push rod assembly (2) is in the initial position (2a), the rear end of the rear-stage transmission piston and the end of the driving hole (211) form an inactive chamber (54).

13. The nested brake upper pump with a dynamic and static dual-core structure according to claim 1 is **characterized in that**: a positioning hole (12) is opened on the brake pump body (1), a fastener (10) is passed through the positioning hole (12), and the fastener (10) can abut against the fixed piston cylinder sleeve (21), so that the fixed piston cylinder sleeve (21) and the brake pump body (1) are pressed against each other;
the installation direction of the fastener (10) and the installation direction of the fixed piston cylinder sleeve (21) are arranged perpendicular to each other.

14. The nested brake upper pump with a dynamic and static dual-core structure according to claim 6 is **characterized in that**: a first accommodating groove (2221) is provided on the front end of the rear-stage transmission piston, an insertion section (234) is formed at the rear end of the front-stage oil-pushing piston, and the insertion section (234) extends into the first accommodating groove (2221);
the inserting section is provided with a second accommodating groove (2341), the second oil hole (225) is provided on the side wall of the second accommodating groove (2341), and the second oil hole (225) is connected with the oil passage cavity (2211) through the second accommodating groove (2341);
the rear piston spring (71) is arranged in the second accommodating groove (2341), and the rear piston spring (71) abuts between the rear end of the first accommodating groove (2221) and the front end of the second accommodating groove (2341).

15. The nested brake upper pump with a dynamic and static dual-core structure according to claim 1, **characterized in that** the fixed piston cylinder sleeve (21) is made of a high-hardness wear-resistant material.
